(19) Europäisches Patentamt

European Patent Office

Office européen des brevets

(11) Veröffentlichungsnummer: **0 526 806 B1**

(12) **EUROPÄISCHE PATENTSCHRIFT**

(45) Veröffentlichungstag der Patentschrift: **20.09.95**

(51) Int. Cl.⁶: **B65G 53/24**, G21C 21/02

(21) Anmeldenummer: **92112542.3**

(22) Anmeldetag: **22.07.92**

(54) **Verfahren und Vorrichtung zum Fördern von Pulver von einer Abgabestation zu einer Auffangstation.**

(30) Priorität: **05.08.91 DE 4125935**

(43) Veröffentlichungstag der Anmeldung:
**10.02.93 Patentblatt 93/06**

(45) Bekanntmachung des Hinweises auf die Patenterteilung:
**20.09.95 Patentblatt 95/38**

(84) Benannte Vertragsstaaten:
**BE DE FR GB**

(56) Entgegenhaltungen:
**DE-A- 2 515 729**
**DE-A- 3 545 494**

(73) Patentinhaber: **SIEMENS AKTIENGESELL-
SCHAFT**
**Wittelsbacherplatz 2**
**D-80333 München (DE)**

(72) Erfinder: **Adelmann, Manfred**
**H.v. Brentanostrasse 17**
**W-6454 Bruchköbel (DE)**
Erfinder: **Heller, Gerhard**
**Kantstrasse 1**
**W-6450 Hanau (DE)**
Erfinder: **Sandner, Herbert**
**Höhenstrasse 12**
**W-6463 Freigericht 5 (DE)**
Erfinder: **Schraudt, Rainer**
**Unterfeldstrasse 1**
**W-8751 Kleinwallstadt (DE)**

## Beschreibung

Die Erfindung betrifft ein Verfahren zum Fördern von Pulver von einer Abgabestation zu einer Auffangstation mit den Merkmalen des Oberbegriffs des Anspruches 1. Die Erfindung betrifft ferner eine Vorrichtung zum Fördern von Pulver mit den im Oberbegriff des Anspruches 9 angegebenen Merkmalen.

Aus der DE-A-35 45 494 ist eine Auffangstation für Kernbrennstoffpulver mit einer Sammelkammer bekannt, an die das Hinterende einer Förderleitung für Kernbrennstoffpulver sowie eine über ein Pulverfilter zu einer Ansaugpumpe führende Saugleitung angeschlossen sind, um in der Sammelkammer gegenüber dem Vorderende der Förderleitung einen verminderten Druck zu erzeugen. Ferner ist eine Abgabestation mit einem Abgabebehälter zum Bereithalten von Kernbrennstoffpulver, einem Ansaugraum am Vorderende der Förderleitung und einer in den Ansaugraum mündenden Fördergaszuleitung vorgesehen. Die Fördergaszuleitung und der Boden des Abgabebehälters sind dabei über ein kurzes Stück der Förderleitung miteinander verbunden, und in den Abgabebehälter ragt von oben ein weiteres Fördergasrohr bis in die Nähe der Fördergasleitung. Als Ansaugraum dienen dabei die zwischen der Mündung der Fördergaszuleitung und dem Ende des Fördergasrohres liegenden Teilräume der Förderleitung und des Abgabebehälters. Sowohl die Fördergaszuleitung wie das Fördergasrohr sind jeweils über ein Ventil absperrbar.

Das zu fördernde Pulver wird dabei zunächst im Abgabebehälter der Abgabestation bereitgehalten. Bei gesperrter Fördergaszuleitung und geöffnetem Fördergasrohr wird das erwähnte Ansaugvolumen teils durch das Eigengewicht der Pulverfüllung im Abgabebehälter, teils den in der Sammelkammer aufrechterhaltenen Saugdruck in den erwähnten Ansaugraum und auch noch über die Mündung der Fördergas-Zuleitung hinaus in die Förderleitung bewegt, so daß sich in der Förderleitung ein Pfropfen bildet. Eine Steuereinrichtung sperrt dann das in den Abgabebehälter führende Fördergasrohr und öffnet das Ventil in der Fördergas-Zuleitung, so daß nunmehr Luft (Fördergas) in den Ansaugraum am Vorderende der Förderleitung eingeleitet wird und daher der Pulverpropfen an der Mündung der Ansaugleitung abreißt.

Das Pulver wird nun durch die an den Ansaugraum angeschlossene, zur Sammelkammer führende Förderleitung mittels des gegenüber dem Druck in der Förderleitung verminderten Drucks in die Ansaugkammer gefördert. Die Steuereinrichtung steuert in einem vorgegebenen Arbeitstakt ein alternierendes Zuführen von Fördergas durch die Fördergaszuleitung und das Fördergasrohr, so daß sich eine Folge von Pulverpropfen in der Förderleitung bildet, die jeweils durch Luftpolster, also Fördergas, voneinander getrennt sind. Während des Betriebes ist also das Pulver in drei Teile aufgeteilt: Den Pulvervorrat im Abgabebehälter, das gesammelte Pulver in einem die Sammelkammer enthaltenden Auffangbehälter und die Kette der Pulverpropfen in der Förderleitung. Dadurch ist allerdings die aus Sicherheitsgründen bei radioaktivem Material häufig vorgeschriebene Dokumentation über den Verbleib des gesamten Pulvers während des laufenden Vorgangs erschwert.

Bei dieser Art der "Pfropfenförderung" ist es wichtig, daß sich im Vorderende der Förderleitung, dem "Ansaugraum", die Pulverpropfen gleichmäßig bilden. Zu große Pfropfen können die Förderleitung verstopfen; zu kleine Pfropfen können sich im Förderrohr auflösen und liegen bleiben, so daß die nächsten Pfropfen zu Verstopfung führen können.

Andererseits können sich durch das Gewicht der Pulverfüllung im Abgabebehälter Pulverbrücken bilden, die den Zugang zum Ansaugraum blockieren.

Ähnliche Probleme können auch auftreten, wenn das Pulver durch die Förderleitung nach dem Staubsaugerprinzip als Fließbett oder Wirbelbett oder nach dem Wanderschienen-Prinzip gefördert wird, wozu ein stärkerer Fördergasstrom benötigt wird.

Der Erfindung liegt die Aufgabe zugrunde, Betriebsstörungen zu vermeiden, die sich dadurch ergeben können, daß sich das Vorderende der Förderleitung nicht stets gleichmäßig mit Pulver füllt, wie dies erforderlich ist, wenn das Pulver durch einen durch die Förderleitung geleiteten Fördergas-Strom gefördert werden soll.

Diese Aufgabe wird gelöst, indem Portionen des Pulvers mittels mechanisch bewegter Teile am Boden des Abgabebehälters entnommen und seitlich zum Ansaugraum transportiert werden. Die mechanisch bewegten Teile zerschlagen dabei bereits beim Entnehmen der Pulverportionen Pulverklumpen und Pulverbrücken, die sich aufgrund des Eigengewichtes der Pulverfüllung im Abgabebehälter bilden können, und stellen sicher, daß der Ansaugraum stets mit den für ein gleichmäßiges Fördern gewünschten Pulverportionen gefüllt wird. Insbesondere werden diese Pulverportionen durch das Eigengewicht des Pulvers, das auf dem Boden des Abgabebehälters lastet, in Zwischenräume zwischen den bewegten Teilen eingefüllt, mittels der mechanischen Bewegung dieser Teile durch eine Öffnung in einer das Gewicht des Pulvers aufnehmenden Wand des Abgabebehälters hindurch transportiert und in den Ansaugraum, bzw. die daran angeschlossene Förderleitung entleert.

Der Ansaugraum ist also kein Teil des Abgabebehälters, der gegenüber dem Innenraum des Abgabebehälters durch keine weiteren Wände abgetrennt wäre und in den das zu fördernde Pulver allein wegen seines Eigengewichtes (höchstens noch unterstützt durch den Ansaugdruck in der Förderleitung) gedrückt würde (DE-A-35 45 494), vielmehr ist der Ansaugraum durch eine das Gewicht des im Abgabebehälter bereitgehaltenen Pulvers abfangende Wand vom Abgabebehälter getrennt und am Boden des Abgabebehälters sind mechanisch angetriebene Teile vorgesehen, die durch eine Öffnung in dieser Wand hindurch in den Ansaugraum beweglich sind.

Die seitlich beweglichen Teile bilden dabei bewegliche Kammern, die in einer ersten Position nach oben offen sind und das Unterende des Abgabebehälters bilden, in einer zweiten Position im Ansaugraum zu liegen kommen und dort sowohl nach oben als auch nach unten oder zur Seite offen sind und vom Fördergas ausgespült werden können.

Dabei ist besonders vorteilhaft, daß sich diese seitlich bewegten Kammern nicht entleeren, wenn der Ansaugraum nicht vorher durch das Fördergas freigespült ist, da in diesem Fall die gefüllten Kammern praktisch nur zwischen dem Boden des Abgabebehälters und dem Ansaugraum hin- und herbewegt werden. Dadurch kann der Ansaugraum nicht verstopfen. Auch für die Sicherheit der Anlage ist es vorteilhaft, daß bei einer Betriebsunterbrechung kein Überdruck und kein Pulverstau entsteht, vielmehr bei einem Zusammenbruch des Ansaug-Druckes ein weiterer Pulvertransport in den Ansaugraum und die Förderleitung selbst dann nicht auftritt, wenn der Antrieb der bewegten Teile nicht gleichzeitig stillgesetzt wird.

Vorteilhafte Weiterbildungen der Erfindung sind in den Unteransprüchen gekennzeichnet. Anhand von zwei Ausführungsbeispielen und fünf Figuren wird die Erfindung näher erläutert. Es zeigen:

Figur 1 das Prinzip einer Pulverförderung mittels eines durch eine Förderleitung geleiteten Fördergasstromes, zunächst noch ohne mechanisch bewegte Teile zum Einfüllen des Pulvers in die Förderleitung;

Figur 2 ein erstes Ausführungsbeispiel einer erfindungsgemäßen Fördereinrichtung mit mechanisch bewegten Teilen zum Einfüllen des Pulvers aus dem Abgabebehälter in das Vorderende der Förderleitung;

Figur 3 ein zweites Ausführungsbeispiel mit derartigen bewegten Teilen,

Figur 4 einen Längsschnitt durch wesentliche Teile der Abgabestation der Figur 3, und

Figur 5 einen Querschnitt durch diese Abgabestation.

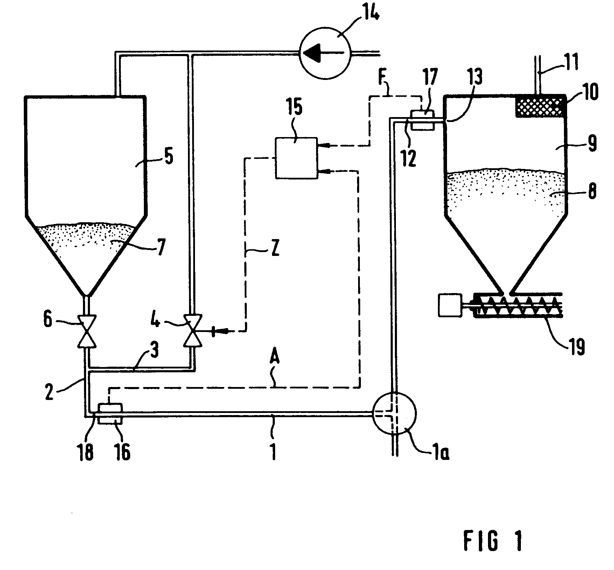

Beim Ausführungsbeispiel nach Figur 1 ist im linken Teil die Abgabestation angeordnet, die über die Förderleitung 1 mit der Auffangstation im rechten Teil der Figur verbunden ist. Das Vorderende 2 der Leitung, in das eine Fördergas-Zuleitung 3 mit einem Absperrventil 4 mündet, dient als Ansaugraum, in den bei geöffnetem Ventil 4 und entsprechender Druckdifferenz Fördergas einströmt, während bei geschlossenem Ventil 4 das Pulver 7 aus einem Abgabebehälter 5 und eine geöffnete Pulversperre 6 eintritt und das Vorderende 2 der Förderleitung füllt. Das geförderte Pulver 8 wird in der Sammelkammer 9 aufgefangen, die an einem oberen Teil eine ein Pulverfilter 10 enthaltende Gas-Ableitung 11 und einen an ein Hinterende 12 der Förderleitung 1 angeschlossenen Einlaß 13 aufweist.

Eine Pumpe 14 erzeugt eine Druckdifferenz DP = P(A)- P(F) zwischen dem Druck P(A) am Absperrventil der Fördergas-Zuleitung und dem Druck P(F) in der Sammelkammer, wobei beim Ausführungsbeispiel der Figur 1 die Pumpe 14 z.B. ein Kompressor sein kann, dessen Druckleitung sowohl in den Abgabebehälter 5 als auch zum Absperrventil 4 führt und dort jeweils einen Überdruck erzeugt und aufrecht erhält. Die Öffnung am Boden des Abgabebehälters, über die der Ansaugraum 2 mit Pulver gefüllt wird, ist dabei zwar stets mit Pulver gefüllt, da aber bei geöffnetem Ventil 4 ein Überdruck auf der Fördergaszuleitung herrscht, ist die Pulverzufuhr auch bei geöffneter Pulversperre 6 praktisch unterbrochen, so daß diese Pulver-Einfüllöffnung automatisch sperrt. Bei gesperrtem Fördergasventil 4 ist dagegen ein ordnungsgemäßes Füllen des Ansaugraumes sichergestellt.

Das Absperrventil 4 wird mittels eines Steuersignales Z aus einer Steuereinrichtung 15 betätigt, die mit Mitteln zusammenarbeitet, die das Füllen des Ansaugraumes überwachen und den Durchtritt von gefördertem Pulver durch den Durchlaß 13 zur Sammelkammer melden. Diese Mittel können z.B. aus kapazitiven Meßgliedern 16 und 17 bestehen, deren Ausgangssignal A überwacht, daß sich am Ort des Meßgliedes 16 ein Pfropfen gebildet hat, während das Ausgangssignal F angibt, ob ein Pfropfen das Hinterende 12 der Förderleitung erreicht.

Durch dieses Überwachungs- und Meldesignal, das der Steuereinrichtung zugeführt ist, wird die Fördergas-Zuleitung jeweils solange offen gehalten, bis das den Pfropfen bildende Pulver durch den Einlaß durchgetreten ist.

Das zum Fördern des Pulvers benutzte Fördergas wird aus der Sammelkammer 9 über das Pulverfilter abgeführt, während die Druckdifferenz durch die Pumpe 14 erreicht wird, die vorteilhaft auch bei geschlossener Fördergaszuleitung weiterläuft. Die Pumpe kann jedoch zum Unterbrechen des Förderns, insbesondere bei Verfahrensstörungen oder bei Erreichen eines vorgegebenen Füllstandes in der Sammelkammer 9 stillgesetzt werden.

Für die Weiterverarbeitung des geförderten Pulvers kann die Sammelkammer 9 kontinuierlich geleert werden, was durch eine entsprechende Förderschnecke 19 in Figur 1 dargestellt ist. Trotzdem kann es erforderlich sein, gelegentlich das Fördern zu unterbrechen, um das Pulverfilter 10 zu entleeren oder Betriebsstörungen, z. B. Verstopfungen der Förderleitungen oder Überfüllungen der Sammelkammer, zu beseitigen. Bei solchen Unterbrechungen wird vorzugsweise die Pumpe 14 stillgesetzt.

Ferner ist mit 1a schematisch eine Abzweigung gezeigt, mit der z. B. Pulverproben entnommen oder andere Abgabe- oder Auffangstationen an die Förderleitung angeschlossen werden können.

Das Ausführungsbeispiel der Figur 1 arbeitet mit einem Überdruck in dem Abgabebehälter der Förderleitung und der Sammelkammer, der sowohl zum Füllen des Ansaugraumes 2 wie zum Fördern des Pulvers benutzt wird. Da also bei Undichtigkeiten Pulver austreten kann, kann es bei radioaktiven Materialien zu Sicherheitsproblemen kommen.

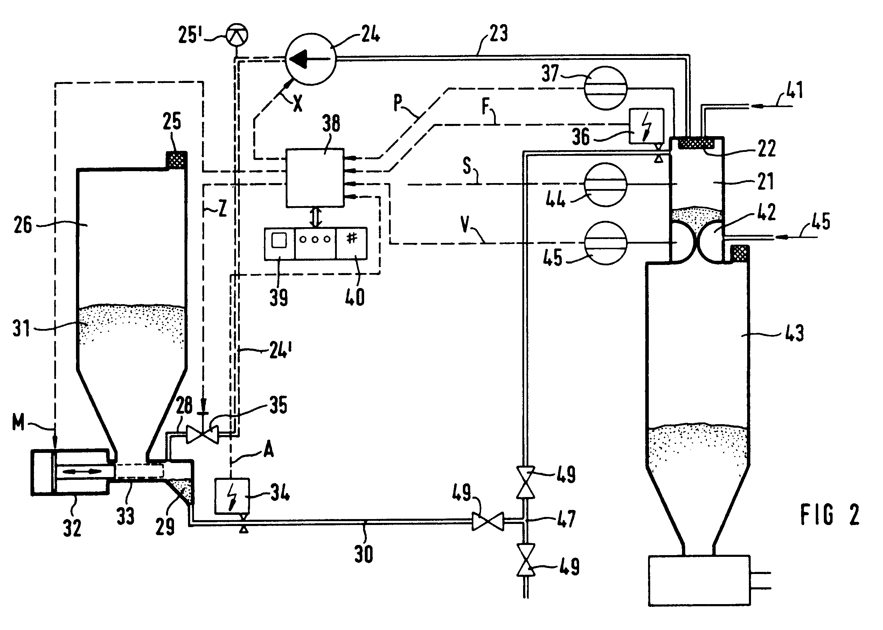

Figur 2 zeigt, daß eine Sammelkammer 21 über ein Pulverfilter 22 und eine Saugleitung 23 zur Pumpe 24 abgesaugt wird. Mit unterbrochenen Linien 24' ist dargestellt, daß durch Rückführen ein Kreislauf für das Fördergas entsteht, wobei die Pumpe 24 als Saugpumpe arbeitet. Ein Frischluftfilter 25 am Abgabebehälter 26 und ein Konstantdruck-Ventil 25' an der Leitung zum Fördergasventil sorgen dort dafür, daß der Druck im Abgabebehälter und auch in der Fördergas-Zuleitung 28 dem Umgebungsdruck in der Abgabestation entspricht.

Um einen Pulverpfropfen im Ansaugraum 29 am Vorderende der Förderleitung 30 zu erzeugen, wird das Pulver beim Ausführungsbeispiel der Figur 2 am Boden des das Pulver 31 enthaltenden Abgabebehälters 26 mechanisch entnommen, z. B. mittels eines Motors 32 und eines Schiebers 33, der das Pulver, das am Boden des Abgabebehälters 31 zunächst durch das Gewicht der Pulverfüllung zusammengepreßt ist und zu einer gewissen Klumpenbildung neigt, in den Ansaugraum 29 transportiert. Dieser Raum ist vom Gewicht der Pulverfüllung 31 entlastet. In ihn münden sowohl die Förderleitung als auch, vorzugsweise von oben, die Fördergaszuleitung 28. Ein derartiger Schieber unterbricht das Einfüllen des Pulvers in den Ansaugraum, sobald er stillgesetzt ist und kann daher - ähnlich wie dies bei Figur 1 beschrieben ist - die Pulver-Einfüllöffnung zum Ansaugraum versperren. Auch der Druck im Abgabebehälter 26 ist dadurch praktisch vom Druck in der Förderleitung und der Fördergaszuleitung entkoppelt und entspricht dem Atmosphärendruck der Abgabestation.

Eine Lichtschranke 34 gibt das Überwachungssignal A ab, wenn ausreichend Pulver den Ansaugraum füllt, so daß nun durch das Steuersignal Z das Fördergasventil 35 in der Fördergaszuleitung 28 geöffnet wird. Diese Lichtschranke ist am Vorderende der Förderleitung verschiebbar und gibt an, wie weit beim Ansaugtakt das Pulver in die Förderleitung angesaugt werden soll.

Ebenso gibt eine Lichtschranke 36 das Meldesignal F ab, sobald zu förderndes Pulver durch das Hinterende der Fördergaszuleitung hindurchgefördert ist. Dann wird über das Steuersignal Z das Fördergasventil in der Fördergaszuleitung wieder gesperrt.

Ferner ist vorgesehen, den Druck in der Sammelkammer 21 über einen entsprechenden Druckmesser 37 zu messen und ein entsprechendes Meßsignal P zu bilden. Dieses Meßsignal kann einerseits der Steuereinrichtung 38 zugeführt werden, andererseits zusammen mit den Überwachungs- und Meldesignalen A und F und/oder dem daraus gebildeten Steuersignal z einer optischen Anzeige 39 zugeführt werden, die (gegebenenfalls mit weiteren Zustandssignalen) den Betriebszustand der Anlage anzeigt. Vorteilhaft wird zumindest das Meßsignal und das Steuersignal fortlaufend in einen Speicher 40 eingelesen, in dem die eingelesenen Daten jeweils für eine vorgegebene Mindestzeit gespeichert werden, wobei diese Mindestzeit bei stillgesetztem Verfahren verlängert wird. Dadurch ist es möglich, bei Störungen des Betriebes die entsprechenden Betriebszustandsdaten auszulesen und die Vorgeschichte der Störung zurückzuverfolgen, wie dies z.B. bei Flugschreibern von Flugzeugen üblich ist.

Ist die Förderleitung 30 verstopft, so erzeugt die Pumpe 24 einen wachsenden Unterdruck in der Sammelkammer 21. Unterschreitet daher der Druck in der Sammelkammer 21 eine vorgegebene Untergrenze, so setzt vorteilhaft die Steuereinrichtung 38 das Verfahren still und die Pumpe 24 wird geflutet, so daß zumindest der Druck in der Förderleitung und der Sammelkammer dem Druck in der Fördergaszuleitung angeglichen wird. Sollten sich in der Förderleitung durch Ansammlung von Pulver Verstopfungen gebildet haben, so werden diese bei der Entspannung des Druckes in der Förderleitung aufgelöst, so daß beim anschließenden Wieder-Anlassen der Pumpe 24 die Leitung durch erneut angesaugtes Fördergas freigespült wird.

Insbesondere können derartige Unterbrechungen der Pulverförderung von Zeit zu Zeit vorgesehen sein, um das Pulverfilter 22, über das das durch die Förderleitung in den Sammelbehälter eingeströmte Fördergas aus der Sammelkammer 21 entfernt wird, in umgekehrter Richtung mit Druckgas zu durchspülen, wie durch den Pfeil 41 angedeutet ist.

Gemäß Figur 2 wird das Pulver beim Fördern durch das Hinterende der Förderleitung 30 hindurch in einen oberen Teil der Sammelkammer 21 geleitet. Es sammelt sich daher am Boden dieser Sammelkammer, an dem ein Pulverdurchlaßventil 42 angeordnet ist. Dieses Ventil trennt die Sammelkammer 21 von einer darunterliegenden Auffangkammer 43 und ist während des Förderns geschlossen gehalten. Ein Füllstandsanzeiger 44, der z.B. optisch oder kapazitiv arbeiten kann, erzeugt ein Füllstandssignal S, wenn in der Sammelkammer 21 ein vorgegebener Füllstand erreicht ist.

Die Steuereinrichtung 38 unterbricht dann das Fördern (Abschalten der Saugpumpe 23) und öffnet das Pulverdurchlaßventil 42, so daß das in der Sammelkammer 21 enthaltene Pulver durch seine eigene Schwerkraft in die Auffangkammer 43 befördert wird.

Vorteilhaft wird das Pulverdurchlaßventil 42 mit Druckgas gesperrt, was durch den Pfeil 45 angedeutet ist. Ein derartiges druckgasbetätigtes Ventil ist aus der DE-OS 35 45 494 bekannt. Zum Öffnen des Pulverdurchlaßventils 42 wird das darin enthaltene Druckgas vorteilhaft verwendet, um gemäß dem Pfeil 41 das Pulverventil 22 zu spülen. Zur Steuerung dieses Vorganges ist ein Manometer 46 vorgesehen, aus dessen Druckmeßwert ein Ventilzustandssignal V für die Steuereinrichtung 38 gebildet wird. Die weitere Verarbeitung des geförderten Pulvers ist durch eine entsprechende Einrichtung 48 (z. B. eine zu einer Pulverpresse führende Förderschnecke) angedeutet.

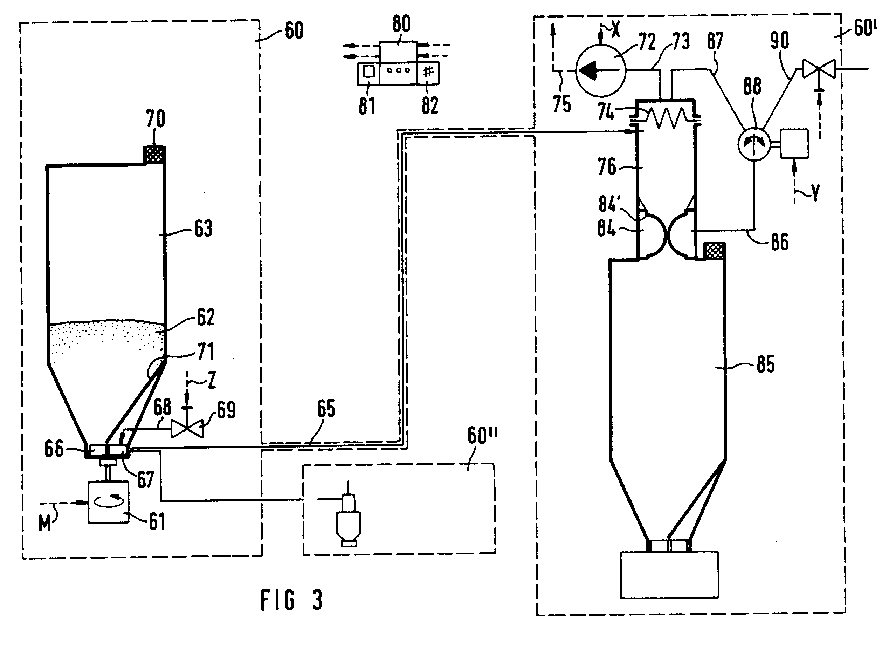

Ferner zeigen Figuren 2 und 3 eine Abzweigung ("Anschlußelement") mit einer Zweigleitung, bei der die von der Abzweigung abgehenden Leitungsteile durch eine Sperreinrichtung (z.B. eine Ventilanordnung 49) gestatten würden, z.B. statt des Pulvers aus einer Abgabestation ein anderes Pulver aus einer anderen Abgabestation in die Sammelkammer zu leiten. Hier ist die Abzweigung 47 verwendet, um das Pulver 31 statt in die Sammelkammer 21 in die Sammelkammer einer anderen Auffangstation zu lenken. Ferner sind Abzweigungen auch vorteilhaft, wenn zur Qualitätskontrolle von Zeit zu Zeit Proben aus dem geförderten Pulver entnommen und zur weiteren Analyse einem Probebehälter zugeführt werden sollen.

Einen Parallelbetrieb zweier im wesentlichen identischer Stationen mit gemeinsamer Gegenstation zeigt Figur 3, bei der Abgabestation und Auffangstation jeweils in einem Handschuhkasten 60, 60', 60'' angeordnet sind. Insbesondere kann aber statt der zweiten Auffangstation auch nur eine zweite Sammelkammer in der Auffangstation 60' vorgesehen sein, wobei beide Sammelkammern zur Beschleunigung des Transports auf einen gemeinsamen Auffangbehälter arbeiten können. Ein geeignetes Mittel, das das Füllen des Ansaugraumes 67 sicherstellt, ist dabei ein Motor 61 als mechanischer Antrieb beweglicher Teile. Diese Teile transportieren Pulver vom Boden eines die Pulverfüllung 62 enthaltenden Abgabebehälters 63 zum Vorderende einer Förderleitung 65, die in diesem Falle doppelt ausgebildet ist und zu zwei Abgabestationen führt.

Insbesondere können die mechanisch bewegten Teile ein Flügelrad enthalten, dessen Flügel am Boden des Abgabebehälters 63 nach oben offene Zwischenräume bilden, in die das Pulver 62 aufgrund seines Eigengewichtes hineingedrückt wird. Der Motor 61, dessen Getriebe an eine Antriebswelle des Flügelrades ankuppelbar ist, bewegt das Flügelrad und die von den Flügeln gebildeten, mit Pulver gefüllten Räume in den Ansaugraum 67, in den eine Fördergas-Zuleitung 68 mit einem absperrbaren Fördergasventil 69 einmündet. Vorteilhaft ist die Fördergas-Zuleitung 68 über das Ventil 69 zur Atmosphäre im Handschuhkasten 60 (Abgabestation) offen. Ist das Fördergasventil 69 während der Rotation des Flügelgrades 66 geschlossen, so liegt der Druck der Förderleitung 65 auch am Ansaugraum 67 an. Der Abgabebehälter 63 ist zur Umgebungs-Atmosphäre in der Abgabestation hin offen, wozu ein Frischgasfilter 70 im oberen Teil des Abgabebehälters vorgesehen ist. Dadurch ergibt sich am Vorderende der Förderleitung 65 ein Unterdruck, durch den das Pulver pfropfenförmig in dieses Vorderende hineingesaugt wird. Die Pfropfenbildung findet also nur statt, solange an der Leitung 65 Unterdruck anliegt. Dies ist im Hinblick auf die Betriebssicherheit vorteilhaft.

Das Flügelrad 66 arbeitet dabei als eine Art "Pulverfräse", die jeweils die unterste, am Boden des Abgabebehälters 63 liegende Pulverschicht abfräst und in den Ansaugraum 67 befördert, der durch eine Abdeckung oder Wand 71 vom Eigengewicht der Pulverfüllung 62 entlastet ist. Sollte dieses Eigengewicht daher in der Pulverfüllung zu Klumpen oder Pulverbrücken führen, so werden diese durch die Fräse aufgebrochen ohne sich in dem vom Druck entlasteten Raum 67 neu bilden zu können.

In der Auffangstation (Handschuhkasten 60') ist eine Pumpe 72 vorgesehen, die mit einer Saugleitung 73 an die Abgabeseite eines Pulverfilters 74 angeschlossen ist. Der Auslaß 75 der Pumpe 72 ist vorteilhaft zur Atmosphäre der Auffangstation hin offen, wobei das ausgestoßene Gas der Pumpe 72 über eine die Förderleitung 65 umgebende Schutzhülle in die Atmosphäre der Abgabestation 60 zurückgeführt werden kann. Das Pulverfilter 74 kann insbesondere aus einem mehrschichtigen Gewebe gefertigt und topfartig in das Innere der Sammelkammer ragen. Bevorzugt weist dieser Filtertopf einen mehrfach gefalteten Boden auf, während der Topfrand mittels dauerelastischen Kunststoff (z.B. zweikomponentiger Silikonkautschuk) zu einem Flansch vergossen sein kann, der in die Seitenwand einer Sammelkammer 76 eingepaßt ist.

Mit 80 ist eine Steuereinrichtung bezeichnet, die jeweils beim Öffnen des Ventils 69 in der Fördergaszuleitung 68 den Motor 61 stillsetzt und damit den Transport von Pulver aus dem Abgabebehälter 63 in den Ansaugraum 64 bzw. das Vorderende der Förderleitung 65 sperrt und umgekehrt durch Sperren der Fördergaszuleitung während des Pulvertransports aus dem Abgabebehälter 63 das Ansaugen des Pulvers und die Pfropfenbildung am Vorderende der Förderleitung ermöglicht.

Nicht dargestellt ist eine Überwachungs- und Meldeeinrichtung, die die Pfropfenbildung am Vorderende der Förderleitung 65 und den Durchtritt von Pulver durch den an die Förderleitung 65 angeschlossenen Einlaß 81 in die Sammelkammer 78 überwacht und meldet. Hierzu können kapazitive oder optische Melder an den entsprechenden Stellen der Förderleitung vorgesehen sein, insbesondere kann es aber auch ausreichen, hierzu einen Druckmesser für den Innendruck der Sammelkammer 76 zu verwenden.

Die Steuereinrichtung 80 kann insbesondere in ein Bedienungspult integriert sein, das auch eine optische Anzeige 81 enthalten kann, die mit den Signalen der entsprechenden Überwachungs- und Meldeeinrichtungen gesteuert wird und den momentanen Betriebszustand der Anlage anzeigt. Um bei Betriebsstörungen deren Ursachen erkennen zu können, kann ein Betriebszustandsspeicher 82 vorgesehen sein, der zumindest für eine vorgegebene Zeit die Betriebsdaten der Vorrichtung, insbesondere also die Überwachungs und Meldesignale sowie die Steuersignale, speichert und sie im Fall eines ungestörten Betriebes nach der vorgegebenen Mindestzeit wieder löscht, bei Betriebsstörungen aber über diese Zeit hinaus gespeichert und für ein späteres Auslesen und Kontrollieren bereit hält.

Aus Gründen der Übersichtlichkeit sind in Figur 3 die Meßglieder (insbesondere ein Druckmesser in der Abgabestation, der den Druck in der Sammelkammer mißt und dessen Signal dem Anzeigegerät 81 und/oder dem Steuergerät 80 zugeführt ist) weggelassen. Weitere vorteilhafte Meßgeräte können zum Beispiel die Saugleistung der Pumpe 72 und/oder den Druckabfall am Pulverfilter 74 messen. Ein hoher Druckabfall am Pulverfilter 74 zeigt dessen Verstopfung an, und ebenso ist das Pulverfilter 74 oder die Förderleitung 65 verstopft, wenn von der Pumpe 72 nur wenig Fördergas aus der Sammelkammer 78 abgesaugt werden kann. Derartige Verstopfungszustände lösen sich meist durch Fluten der Vorrichtung wie es auch für das regelmäßige Entleeren der Sammelkammer 76 vorgesehen ist, die an ihrem Boden mittels eines Pulverdurchlaßventils 84 gegenüber einer unter ihr angeordneten Auffangkammer 85 druckdicht verschlossen und an der zum Beispiel ein Füllstandsmesser angeordnet ist.

Das Pulverdurchlaßventil kann von einer am Boden rings um die Sammelkammer herumlaufenden Membran 84' gebildet sein, die mittels Druckgas aus einer Druckgasleitung 86 soweit zusammengedrückt werden kann, daß sie den Pulverdurchlaß am Boden der Sammelkammer 78 vakuumdicht verschließt. Auch an der Unterdruckseite (Abgabeseite) des Pulverfilters 74 kann eine Druckgaszuführung 87 vorgesehen sein, wobei ein Mehrwegeventil 88 durch das Steuersignal Y und ein entsprechendes Stellglied so betätigt wird, daß entweder die Druckgasleitung 86 des Pulverdurchlaßventils 84 mit einer Druckgasleitung 90 verbunden ist (dann ist das Pulverdurchlaßventil 84 durch den Druck an der Leitung 90 zusammengedrückt und gesperrt), oder die Druckgasleitung 86 zum Pulverdurchlaßventil ist mit der Druckgaszuführung 87 zum Pulverfilter 74 verbunden, so daß das Druckgas nunmehr aus dem Pulverdurchlaßventil 84 heraus, über das Ventil 88 und durch das Pulverfilter 74 in die Sammelkammer 76 strömt.

Dadurch wird nicht nur die Sammelkammer geflutet, sondern gleichzeitig das Pulverventil 74 von angesaugtem Pulver befreit. Eine direkte Verbindung der Druckgasleitung 90 zur Druckgaszuführung 87 ist beim Dreiwegeventil 88 nicht vorgesehen. Ist vielmehr z.B. im Fall einer Verstopfung eine größere Gasmenge zum Fluten von Sammelkammer und Förderleitung nötig, so wird diesen Teilen Druckgas dosiert zugeführt, indem die Druckgasleitung 86 mehrmals hintereinander durch das Ventil 84 geschlossen und wieder durch das Filter 74 in die Sammelkammer entleert wird.

Vorteilhafte Einzelheiten der Aufnahmestation 60' und der gesamten Vorrichtung, insbesondere auch Abzweigungen, mit denen weitere Aufnahmestationen und/oder Abgabestationen oder auch Auffangstationen für entnommene Proben an die Förderleitung 65 angeschlossen werden können, sind in den gleichzeitig eingereichten Patentanmeldungen "Vorrichtung zur Pulverförderung" und "Vorrichtung mit Abzweigungen zur Pulverförderung" des gleichen Anmelders angegeben, deren Inhalt der Beschreibung der vorliegenden Erfindung zuzurechnen ist.

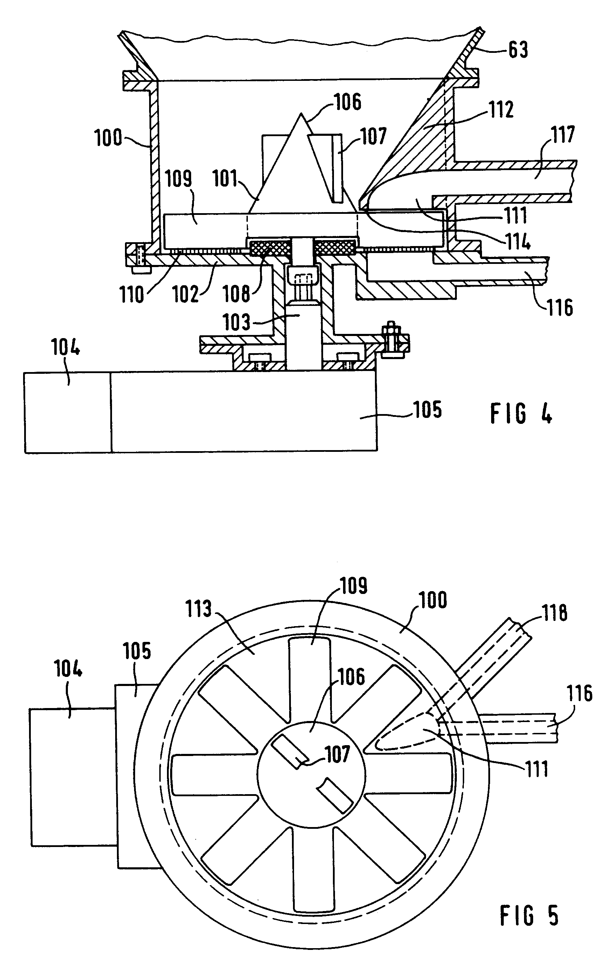

Die Betriebsweise der Vorrichtungen nach den Figuren 2 und 3 ist ausführlich in der am gleichen Tag eingereichten Anmeldung "Verfahren und Vorrichtung zum Fördern von Pulver" des gleichen Anmelders beschrieben, deren Inhalt Teil der vorliegenden Erfindung ist, insbesondere sofern es sich um die Förderung von Kernbrennstoffpulver handelt. In den Figuren 4 und 5 sind der Ansaugraum 67 und die mechanisch beweglichen Teile 66 der Figur 3 im Längsschnitt und Querschnitt dargestellt.

Dabei ist ein an den unteren Rand des Abgabebehälters 63 angeflanschtes Gehäuse 100 erkennbar, über dessen kreisförmigen Boden 102 ein Flügelrad 101 konzentrisch angeordnet ist. Die Achse 103 dieses Flügelrades kann zum Beispiel durch diesen Boden 102 hindurch nach unten geführt sein, um auf eine Getriebewelle 103 des Motors 104 und seines Getriebes 105 aufgesteckt und angekuppelt zu werden. In Figur 4 ist dabei vorgesehen, den Mittelteil 106 des Flügelrades mit vorspringenden Teilen 107 zu versehen, die einerseits Angriffsflächen für Montagewerkzeuge, andererseits Mischflügel für das Pulver bilden.

Zwischen zentralen Teilen (Mittelteil 106 und die daran eingreifende Achse) und dem Boden 102 können dabei Dichtungen angeordnet sein, die insbesondere aus Filz bestehen können.

Seitlich am Mittelteil 106 angeordnete Flügel 109 erstrecken sich über dem Boden praktisch bis zur Seitenwand des Gehäuses 100 und tragen an ihren Unterseiten auf den Boden des Abgabebehälters gerichtete Bürsten 110. Dadurch werden Pulverteile von den Flügeln 109 mitgenommen, selbst wenn diese unregelmäßig geformt sind. Zum Beispiel enthalten Pulver, die durch Zerkleinern gesinterten Materials entstehen, häufig Splitter, die durch die Bürsten 110 vom Boden abgekehrt werden, ohne bei der Rotation des Flügelrades Schleifspuren am Gehäuseboden zu erzeugen. Wie aus Figur 4 ersichtlich ist, ist der Ansaugraum 111 (bzw. Position 29 in Figur 2 oder Position 67 in Figur 3) seitlich neben dem Boden 102 angeordnet und durch eine Wand 112 vom Inneren des Abgabebehälters 63 bzw. des Gehäuses 100 abgetrennt. Diese Wand 112, die in Figur 5 zur größeren Übersichtlichkeit weggelassen ist, fängt das Gewicht der Pulverfüllung des Abgabebehälters ab. Die Flügel 109 bilden zusammen mit den Wandteilen 100 und 102 der Räume 113, die nach oben offen sind und deren Volumen die Größe der Pulverportionen bestimmt, die durch die Bewegung des Flügelrades mitgenommen und durch eine Öffnung 114 der Wand 112 hindurch in den Ansaugraum 111 bewegt werden. Das Füllen dieser Zwischenräume 113 erfolgt, indem das Pulver im Abgabebehälter 63 teils durch das eigene Gewicht und den Druck der auf dem Boden lastenden Pulverfüllung in den Zwischenraum 109 gepreßt wird. Im Ansaugraum können diese Räume durch das Eigengewicht des Pulvers nach unten entleert werden, was durch den Ansaugdruck der Förderleitung auch bei schwer-rieselndem Pulver sichergestellt wird. Vorteilhaft mündet die Ansaugleitung ungefähr waagrecht in den Ansaugraum, der also seitlich abgesaugt wird. Fällt der Unterdruck in der Förderleitung 116 weg, füllt sich der Ansaugraum rasch und die Räume 113 entleeren sich nicht mehr, wodurch der Transport des Pulvers aus dem Abgabebehälter in den Ansaugraum 111 unterbrochen wird. Das ist besonders aus Sicherheitsgründen vorteilhaft. Um diesen Ansaugdruck während des Transports (Transport-Takt) aufrechtzuerhalten, ist die Fördergaszuleitung 117, die vorteilhaft von oben in den Ansaugraum 111 mündet, gesperrt gehalten.

Der beschriebene Transport des Pulvers aus dem Abgabebehälter in den Ansaugraum erfolgt also in einem ersten Arbeitstakt, in dem die Fördergaszuleitung 117 gesperrt gehalten und der Motor 104 betrieben wird. Der Motor kann dabei (zum Beispiel mit etwa 30 Umdrehungen pro Minute) laufen und mehrere Portionen in den Ansaugraum transportieren, so daß sich am Vorderende der Förderleitung ein entsprechend großer Pulverpfropfen bilden kann.

In einem zweiten Arbeitstakt, dem Fördertakt für die Förderleitung, wird nun der Motor stillgesetzt, und die Fördergaszuleitung 117 wird freigegeben. Dies geschieht durch die erwähnte Betätigung des Ventils 35 bzw. 69 der Figuren 2 und 3, wobei insbesondere darauf zu achten ist, daß der Strömungsweg zwischen der Fördergaszuleitung 117 und der Förderleitung 116 nicht durch einen Flügel des Flügelrades übermäßig verperrt ist.

Da hierbei die Fördergaszuleitung 117 über das erwähnte Fördergasventil und der Abgabebehälter 63 zum Beispiel über ein Frischluftventil in die Atmosphäre der Abgabestation, insbesondere eines Handschuhkastens, führt, wird das Fördergas also mit dem Atmosphärendruck der Abgabestation in den Abgabebehälter und die Fördergas-Zuleitung geleitet. Es entsteht also kein Überdruck, der unter Umständen zum Bersten des Handschuhkastens führen könnte.

Nach Figur 4 liegen Fördergasleitung 117 und Förderleitung 116 ungefähr übereinander. Bei der Leitung 118 in Figur 5 handelt es sich um den Anschluß einer parallelen Leitung; insbesondere können die beiden Leitungen 116 und 118 als Doppelleitung zwar zu getrennten Sammelkammern führen, werden aber in einen gemeinsamen Auffangbehälter entleert, um den Fördervorgang zu beschleunigen.

**Patentansprüche**

1. Verfahren zum Fördern von Pulver von einer Abgabestation zu einer Auffangstation, wobei das Pulver in der Abgabestation in einem Abgabebehälter (63) bereitgehalten und in einen Ansaugraum (29) bewegt wird, durch eine in den Ansaugraum angeschlossene Fördergaszuleitung (28) Fördergas eingeleitet wird und in einer Sammelkammer (21) ein gegenüber dem Druck in der Fördergaszuleitung vermindernder Druck aufrechterhalten und das Pulver durch eine den Ansaugraum mit der Sammelkammer verbindende Förderleitung (30) gefördert wird, **dadurch gekennzeichnet,** daß zum Bewegen des Pulvers Portionen dieses Pulvers mittels mechanisch horizontal bewegter Teile am Boden des Abgabebehälters (26) entnommen und seitlich in den Ansaugraum (29) transportiert werden.

2. Verfahren nach Anspruch 1, **dadurch gekennzeichnet,** daß jeweils eine Portion des Pulvers durch das auf dem Boden des Abgabebehälters lastende Gewicht des Pulvers in eine von wenigstens einem bewegten Teil gebildeten Zwischenraum eingefüllt, mittels der mechanischen Bewegung der Teile durch eine Öffnung in einer das Gewicht des Pulvers aufnehmenden Wand des Abgabebehälters seitlich hindurchtransportiert und in den Ansaugraum entleert wird.

3. Verfahren nach Anspruch 2, **dadurch gekennzeichnet,** daß im Ansaugraum die Zwischenräume nach unten entleert werden.

4. Verfahren nach Anspruch 2 oder 3, **dadurch gekennzeichnet,** daß der Ansaugraum zum Entleeren der Zwischenräume abgesaugt wird.

5. Verfahren nach einem der Ansprüche 2 bis 4, **dadurch gekennzeichnet,** daß die in den Ansaugraum transportierten Portionen des Pulvers seitlich aus dem Ansaugraum in die Förderleitung gesaugt werden.

6. Verfahren nach einem der Ansprüche 1 bis 5, **dadurch gekennzeichnet,** daß in einem ersten Arbeitstakt die in den Ansaugraum mündende Fördergaszuleitung gesperrt gehalten und ein Motor für die mechanische Bewegung der Teile betrieben wird, bis eine oder mehrere Portionen des Pulvers in den Ansaugraum transportiert sind, und daß in einem zweiten Arbeitstakt der Motor stillgesetzt und die Fördergaszuleitung freigegeben wird.

7. Verfahren nach Anspruch 6, **dadurch gekennzeichnet,** daß das Fördergas mit dem Atmosphärendruck der Abgabestation in den Abgabebehälter und die Fördergaszuleitung geleitet wird.

8. Verfahren nach einem der Ansprüche 1 bis 7, **dadurch gekennzeichnet,** daß die Portionen des Pulvers aus dem Ansaugraum über eine mehrfache Förderleitung in mehrere Sammelkammern unterschiedlicher Auffangstationen gefördert werden.

9. Vorrichtung zum Fördern von Pulver mit
   a) einer Auffangstation mit einer Sammelkammer (21),
   b) einer mit einem Hinterende an der Sammelkammer angeschlossenen Förderleitung (30) und einer Pumpe (24) zum Erzeugen eines gegenüber dem Druck an einem Vorderende der Förderleitung verminderten Druck in der Sammelkammer und
   c) einer Abgabestation mit einem Abgabebehälter (26) zum Bereithalten von Pulver (31), einem Ansaugraum (29) am Vorderende der Förderleitung und einer in den Ansaugraum mündenden Fördergaszuleitung (28), **dadurch gekennzeichnet,** daß der Ansaugraum (29) durch eine das Gewicht des in Abgabebehälter bereitgehaltenen Pulvers abfangende Wand vom Abgabebehälter getrennt ist und daß am Boden des Abgabebehälters mechanisch angetriebene, durch eine Öffnung in der Wand hindurch in den Ansaugraum horizontal bewegliche Teile (32, 33) vorgesehen sind (Fig. 2).

10. Vorrichtung nach Anspruch 9, **dadurch gekennzeichnet,** daß als bewegliche Teile mindestens ein auf der Oberseite des Bodens entlanggleitender, zwischen dem Abgabebehälter und dem Ansaugraum hin und her beweglicher Schieber (33) und ein Antrieb (32) für den Schieber vorgesehen sind (Figur 2).

11. Vorrichtung nach Anspruch 10, **dadurch gekennzeichnet,** daß der Ansaugraum seitlich neben dem Boden des Abgabebehälters angeordnet ist und die Schieber als Flügel eines drehbaren Flügelrades ausgebildet sind (Fig. 3).

12. Vorrichtung nach Anspruch 11, **gekennzeichnet durch** auf den Boden des Abgabebehälters gerichtete Bürsten an Unterseiten der Flügel.

13. Vorrichtung nach Anspruch 11 oder 12, **gekennzeichnet durch** Dichtungen (108) aus Filz, die zwischen dem Boden (102) des Abgabebehälters und zentralen Teilen (106) des Flügelrades angeordnet sind.

14. Vorrichtung nach einem der Ansprüche 9 bis 13, **dadurch gekennzeichnet,** daß die Förderleitung ungefähr waagrecht aus dem Ansaugraum herausführt.

15. Vorrichtung nach einem der Ansprüche 9 bis 14,

**dadurch gekennzeichnet,** daß die Fördergaszuleitung (117) von oben in den Ansaugraum (111) mündet (Figur 4).

16. Vorrichtung nach einem der Ansprüche 9 bis 15,
**dadurch gekennzeichnet,** daß die Pumpe (75) in der Auffangstation angeordnet und über eine ein Pulverfilter (74) enthaltende Saugleitung (73) an die Sammelkammer (76) angeschlossen ist (Figur 3).

17. Vorrichtung nach einem der Ansprüche 9 bis 16,
**dadurch gekennzeichnet,** daß die Leitung als an einen gemeinsamen Ansaugraum (111) angeschlossene Doppelleitung (116, 118) mit zwei Sammelkammern ausgebildet ist, die in einen gemeinsamen Auffangbehälter entleerbar sind (Figur 4).

**Claims**

1. Method for transporting powder from a distributing station to a receiving station, wherein the powder is kept ready in a distributing container (63) in the distributing station and is moved into a suction space (29), delivery gas is introduced through a delivery gas supply line (28) connected to the suction space, and a reduced pressure relative to the pressure in the delivery gas supply line, is maintained in a collecting chamber (21), and the powder is transported through a conveyor pipeline (30) connecting the suction space to the collecting chamber, characterised in that, for moving the powder, portions of this powder are removed and transported laterally to the suction space (29) by means of parts on the base of the distributing container (26) that are moved horizontally in a mechanical way.

2. Method according to claim 1, characterised in that an interspace formed by at least one moved part is filled with a respective portion of powder by the weight of the powder resting on the base of the distributing container, the said portion of powder is transported laterally by means of the mechanical movement of the parts through an opening in a wall of the distributing container receiving the weight of the powder and is evacuated into the suction space.

3. Method according to claim 2, characterised in that, in the suction space, the interspaces are evacuated downwards.

4. Method according to claim 2 or 3, characterised in that the suction space is exhausted for evacuating the interspaces.

5. Method according to one of claims 2 to 4, characterised in that the portions of powder that are transported to the suction space are sucked laterally out of the suction space and into the conveyor pipeline.

6. Method according to one of claims 1 to 5, characterised in that, in a first cycle of work, the delivery gas supply line opening into the suction space is kept closed, and a motor for the mechanical movement of the parts is operated until one or more portions of powder have been transported to the suction space, and in that, in a second cycle of work, the motor is shut down and the delivery gas supply line is cleared.

7. Method according to claim 6, characterised in that the delivery gas is passed, at the atmospheric pressure of the distributing station, to the distributing container and to the delivery gas supply line.

8. Method according to one of claims 1 to 7, characterised in that the portions of powder are transported from the suction space to several collecting chambers of different receiving stations by way of a multiple conveyor pipeline.

9. Apparatus for transporting powder, having
(a) a receiving station having a collecting chamber (21),
(b) a conveyor pipeline (30) connected by a rear end to the collecting chamber, and a pump (24) for generating in the collecting chamber a reduced pressure relative to the pressure at the front end of the conveyor pipeline, and
(c) a distributing station having a distributing container (26) for keeping powder (31) ready, a suction space (29) at the front end of the conveyor pipeline and a delivery gas supply line (28) opening into the suction space, characterised in that the suction space (29) is separated from the distributing container by a wall supporting the weight of the powder kept ready in the distributing container, and in that, on the base of the distributing container, there are provided mechanically driven parts (32, 33) which can be moved horizontally into the suction space through an opening in the wall (Figure 2).

10. Apparatus according to claim 9, characterised in that at least one slider (33) which slides along on the upper side of the base and can move backwards and forwards between the distributing container and the suction space, and a drive (32) for the slider (Figure 2), are provided as the moveable parts.

11. Apparatus according to claim 10, characterised in that the suction space is arranged beside the base of the distributing container and the sliders are formed as blades of a rotating fan wheel (Figure 3).

12. Apparatus according to claim 11, characterised by brushes on undersides of the blades, which brushes are directed towards the base of the distributing container.

13. Apparatus according to claim 11 or 12, characterised by seals (108) made of felt, which are arranged between the base (102) of the distributing container and central parts (106) of the fan wheel.

14. Apparatus according to one of claims 9 to 13, characterised in that the conveyor pipeline leads out of the suction space in an approximately horizontal manner.

15. Apparatus according to one of claims 9 to 14, characterised in that the delivery gas supply line (117) opens into the suction space (111) from above (Figure 4).

16. Apparatus according to one of claims 9 to 15, characterised in that the pump (75) (sic) is arranged in the receiving station and is connected to the collecting chamber (76) by way of a suction pipe (73) containing a powder filter (74) (Figure 3).

17. Apparatus according to one of claims 9 to 16, characterised in that the pipeline is formed as a double pipeline (116, 118) which is connected to a common suction space (111) and which has two collecting chambers which can be evacuated into a common receiving container (Figure 4).

**Revendications**

1. Procédé de transport de poudre d'un poste d'envoi à un poste de réception, selon lequel la poudre dans le poste de d'envoi est maintenue à disposition dans un récipient d'envoi (63) et est amenée dans une chambre d'aspiration (29), un gaz d'entraînement est introduit par un conduit (28) d'amenée de gaz d'entraînement, raccordé à la chambre d'aspiration, et une pression, qui est réduite par rapport à la pression régnant dans le conduit d'amenée du gaz d'entraînement, est maintenue dans une chambre collectrice (21), et la poudre est entraînée dans un conduit de transport (30) qui relie la chambre d'aspiration à la chambre collectrice, caractérisé par le fait que pour le déplacement de la poudre, des parties de cette dernière sont prélevées sur le fond du récipient d'envoi (26), au moyen de pièces déplacées mécaniquement ou horizontalement, et sont transportées latéralement dans la chambre d'aspiration (29).

2. Procédé suivant la revendication 1, caractérisé par le fait qu'une partie de la poudre est introduite, sous l'effet du poids de la poudre qui appuie sur le fond du récipient d'envoi, dans un espace intermédiaire formé par au moins une pièce mobile, est entraînée latéralement, au moyen du déplacement mécanique des pièces, dans une ouverture ménagée dans une paroi, qui supporte le poids de la poudre, du récipient d'envoi et est évacuée dans la chambre d'aspiration.

3. Procédé suivant la revendication 2, caractérisé par le fait que dans la chambre d'aspiration, les espaces intermédiaires sont vidés vers le bas.

4. Procédé suivant la revendication 2 ou 3, caractérisé par le fait qu'une aspiration est réalisée dans la chambre d'aspiration pour vider les espaces intermédiaires.

5. Procédé suivant l'une des revendications 2 à 4, caractérisé par le fait que les parties de la poudre, qui sont entraînées dans la chambre d'aspiration, sont aspirées latéralement à partir de la chambre d'aspiration pour être introduites dans le conduit de transport.

6. Procédé suivant l'une des revendications 1 à 5, caractérisé par le fait que pendant la première phase de travail, le conduit d'amenée du gaz d'entraînement, qui débouche dans la chambre d'aspiration, est maintenue fermé et qu'on fait fonctionner un moteur pour exécuter le déplacement mécanique des pièces jusqu'à ce qu'une ou plusieurs parties de la poudre aient été amenées dans la chambre d'aspiration, et que lors d'une seconde phase de travail, on arrête le moteur et on dégage le conduit d'amenée du gaz d'entraînement.

**7.** Procédé suivant la revendication 6, caractérisé par le fait que le gaz d'entraînement est envoyé à la pression de l'atmosphère du poste d'envoi, au récipient d'envoi et au conduit d'amenée du gaz d'entraînement.

**8.** Procédé suivant l'une des revendications 1 à 7, caractérisé par le fait que les parties de la poudre sont entraînées hors de la chambre d'aspiration par l'intermédiaire d'un conduit d'entraînement multiple, pour être amenées dans plusieurs chambres collectrices de postes de réception différents.

**9.** Dispositif de transport de poudre, comportant
a) un poste de réception comportant une chambre collectrice (21),
b) un conduit de transport (30) raccordé à une extrémité arrière de la chambre collectrice, et une pompe (24) pour produire dans la chambre collectrice une pression réduite par rapport à la pression présente à une extrémité du conduit de transport, et
c) un poste d'envoi comportant un récipient d'envoi (26) pour maintenir à disposition de la poudre (31), une chambre d'aspiration (29) située à l'extrémité avant du conduit de transport et un conduit (28) d'amenée du gaz d'entraînement, qui débouche dans la chambre d'aspiration,
caractérisé par le fait que la chambre d'aspiration (29) est séparée du récipient d'envoi par une paroi qui supporte le poids de la poudre préparée dans le récipient d'envoi, et que des pièces (32,33), qui sont entraînées mécaniquement et peuvent être amenées mécaniquement dans la chambre d'aspiration en passant par une ouverture ménagée dans la paroi, sont prévues sur le fond du récipient d'envoi (figure 2).

**10.** Dispositif suivant la revendication 9, caractérisé par le fait que sont prévus, comme pièces mobiles, au moins un tiroir (33), qui glisse sur la face supérieure du fond et va-et-vient entre le récipient d'envoi et la chambre d'aspiration, et un dispositif d'entraînement (32) pour le tiroir (figure 2).

**11.** Dispositif suivant la revendication 10, caractérisé par le fait que la chambre d'aspiration est disposée latéralement à côté du fond du récipient d'envoi et que les tiroirs sont réalisés sous la forme d'ailettes d'une roue à ailettes (figure 3).

**12.** Dispositif suivant la revendication 11, caractérisé par des brosses dirigées vers le fond du récipient d'envoi et se trouvant sur les faces inférieures des ailettes.

**13.** Dispositif suivant la revendication 11 ou 12, caractérisé par des garnitures d'étanchéité (108) en feutre, qui sont disposées entre le fond (102) du récipient d'envoi et des parties centrales (106) de la roue à ailettes.

**14.** Dispositif suivant l'une des revendications 9 à 13, caractérisé par le fait que le conduit de transport ressort presque horizontalement hors de la chambre d'aspiration.

**15.** Dispositif suivant l'une des revendications 9 à 14, caractérisé par le fait que le conduit (117) d'amenée du gaz d'entraînement débouche du haut dans la chambre d'aspiration (111) (figure 4).

**16.** Dispositif suivant l'une des revendications 9 à 15, caractérisé par le fait que la pompe (75) est disposée dans le poste de réception et est raccordée à la chambre collectrice (76) par l'intermédiaire d'un conduit d'aspiration (73) comportant un filtre à poudre (74) (figure 3).

**17.** Dispositif suivant l'une des revendications 9 à 16, caractérisé par le fait que le conduit est réalisée sous la forme d'un conduit double (116,118), qui est raccordé à une chambre d'aspiration (111) commune et comporte deux chambres collectrices, qui peuvent être vidées dans un récipient de réception commun (figure 4).

FIG 1

FIG 2

FIG 3

FIG 4

FIG 5